# EUROPÄISCHE PATENTSCHRIFT

(11) **EP 1 511 140 B1**
(45) Veröffentlichungstag und Bekanntmachung des Hinweises auf die Patenterteilung: **26.03.2008**
(21) Anmeldenummer: 04016004.6
(22) Anmeldetag: 07.07.2004
(51) Int. Cl.: H02G 3/04

(54) **Abriebschutzvorrichtung**
Abrasion protection device
Dispositif de protection contre l' abrasion

(30) Priorität: 01.09.2003 DE 10340180
(43) Veröffentlichungstag der Anmeldung: 02.03.2005
(73) Patentinhaber: FFA Textile AG, 9445 Rebstein (CH)
(72) Erfinder: Lindner, Michael, 83026 Rosenheim (DE)
(74) Vertreter: nospat Patentanwälte

(56) Entgegenhaltungen:
- EP-A- 0 886 357
- EP-A- 1 063 747
- DE-A1- 10 107 569
- DE-A1- 10 149 975

## Beschreibung

Die Erfindung betrifft eine Abriebschutzvorrichtung nach dem Oberbegriff des Anspruch 1 und insbesondere eine Abriebschutzvorrichtung zum Schutz von Kabeln, insbesondere von Kabeln, Leitungen, Litzen, Hüllrohren und dergleichen, z. B. in Kraftfahrzeugen.

Kabel, Leitungen, Kabelbäume und der gleichen, welche in Fahrzeugen oder Anlagen verlegt werden, können durch die üblicherweise in Fahrzeugen oder im Anlagen in bzw. Maschinen auftretenden Vibrationen so genannte Klappegeräusche erzeugen. Darüber hinaus besteht die Gefahr, dass durch die Vibrationen die Kabelisolierungen bzw. Leitung- oder Rohrmäntel durch die Vibrationsbewegungen und Relativbewegungen, insbesondere zum Beispiel an Blechkanten in Fahrzeugen aufgerieben bzw. aufgescheuert werden. Derartige Probleme treten zum Beispiel sowohl in Land-, Wasser- wie auch in Luftfahrzeugen sowie im industriellen Anlagen oder im Maschinenbau auf. (Im Folgenden wird häufig stellvertretend für derartige langestreckte, zu schützende Gegenstände das Wort " Kabelbaum " verwendet, ohne dass dadurch die Erfindung eingeschränkt wird).

Um Klappergeräusche zu vermeiden, sind Ummantelungen, bestehend aus einem Polyurethan-Schaumstoffstreifen mit einer glatten Polyurethan-Haut auf der Außenseite und mit einem flächigen Klebestoffauftrag auf der Innenseite bekannt. Die zu ummantelnden Kabelbäume werden auf die eine Hälfte der Innenseite des Schaumstoffstreifens aufgeklebt, anschließend wird die andere Hälfte des Polyurethan-Schaumstoffstreifens umgeschlagen und sowohl mit Kabeln des Kabelbaums als auch mit der einen Hälfte des Schaumstoffstreifens teilbereichsweise verklebt. Hierdurch entsteht ein flaches Schlauchelement mit einer relativ glatten Polyurethan-Außenhaut. Derartige Ummantelungen sind zwar einfach herzustellen, aber schwer zu verarbeiten. Sie haben daher in der praktischen Anwendung Nachteile. Zum einen wird ein flaches und relativ breites Schlauchgebilde erzeugt, das bei der Verlegung in Fahrzeugen um Ecken und durch schmale Durchgänge Schwierigkeiten bereitet. Außerdem hält die Polyurethan-Außenhaut einer scheuernden oder reibenden Beanspruchung nicht ausreichend Stand; sie wird insbesondere in Kraftfahrzeugen durch den Kontakt mit scharfen Blechkanten frühzeitig zerstört, sodass der Klapper- und Scheuerschutz verloren geht.

Des Weiteren sind Schutzummantelungen für elektrische Kabelbäume in Form von Wellrohren bekannt, wobei die Wellrohre aus harten, festen Kunststoffen bestehen. Derartige Wellrohre sind über die gesamte Länge geschlitzt, sodass die Kabel einzeln durch den Schlitz eingelegt werden können. Um zu verhindern, dass das harte Kunststoffwellrohr Klappergeräusche erzeugt, wird es mit Filzstreifen umhüllt, wobei die Längskanten der Filzstreifen zum Zwecke der Fixierung ebenfalls in den Längsschlitz eingesteckt werden. Hierbei ist von Nachteil, dass es eine hohen Arbeitsaufwand erfordert, die Kabel in die Filzstreifenkanten in einen Längsschlitz des Wellrohres einzuführen. Darüber hinaus besteht die Gefahr, dass die Filzkanten bei Vibrationen wieder aus dem Längsschlitz rutschen, sodass der Verbund und damit der Schutz verloren geht. Darüber hinaus sind die Kabel im Wellrohr nicht fixiert, woraus ebenfalls Geräusche resultieren können.

Aus der DE 295109701 und der EP 0 886 357 A2 ist eine Schutzummantelung für Kabelbäume bekannt, welche einen Filz- oder Schaumstoffstreifen aufweist, dessen Innenseite mit Klebestoff belegt ist, wobei die Breite des Filz- oder Schaumstoffstreifens auf den Umfang des Kabelbaums abgestimmt ist. An der Außenseite des Filz- bzw. Schaumstoffstreifens ist eine abriebfeste Materialbahn befestigt, welche bezüglich der Längserstreckung des Filz- bzw. Schaumstoffstreifens seitlich versetzt ist, sodass sie auf einer Längsseite über den Filz- bzw. Schaumstoffstreifen übersteht, während an der gegenüberliegenden Längskante ein Bereich des Filz- oder Schaumstoffstreifens frei bleibt. Der Filz- oder Schaumstoffstreifen wird nach dem Aufkleben auf den zu schützenden Gegenstand zu einem Schlauch geformt, wobei der Überstand der Materialbahn überlappend den Stoßbereich des Filz- bzw. Schaumstoffschlauches überklebt und so die Längskante schließt. Die Materialbahn soll bevorzugt aus einem Polyestervlies ausgebildet sein, wobei die Materialbahn mit dem Filz- bzw. Schaumstoffstreifen durch teil- oder ganzflächiges Verkleben, Vernadeln oder Vernähen verbunden ist. Der Klebstoff auf dem Überstand der Materialbahn, mit welche die Überlappung des Filz- bzw. Schaumstoffschlauchabschnitts geschlossen werden soll, soll ein selbstklebender Klebstoff sein, welcher mit einem Schutzpapier abgedeckt ist. Als Material für den Schaumstoffstreifen sollen PolyurethanSchaum, Polyethen-Schaum oder Zellkautschuk eingesetzt werden.

Aus der DE 101 49 975 A1 ist eine Vorrichtung zum Schutz eines Gegenstandes vor Beschädigung und/oder zur Minderung von Vibrationsgeräuschen bekannt, bei dem eine textile Schicht durch Wärmeverbindung mit einer relativ dicken Folienschicht thermisch verbunden wird, wobei es sich bei dem Verbindungsverfahren um ein Kalandrierverfahren handelt. Die Folie besteht bevorzugt aus PVC und weist eine recht hohe Dicke von 0,1 bis 0,4 mm auf. Diese erhebliche Dicke der Folie ist notwendig um das Kalanderverfahren überhaupt durchführen zu können.

Bei dieser bekannten Ummantelung ist von Nachteil, dass der Schaumstoffstreifen bzw. der Filzstreifen an den Durchmesser der zu schützenden langgestreckten Gegenstände, z. B. Kabelbäume, so angepasst sein muss, dass die Überlappung der Schaumstoffkanten gewährleistet ist. Somit müssen für unterschiedliche Durchmesser unterschiedlich bemessene exakt angepasste Ummantelungen bereitgehalten werden. Darüber hinaus ist nachteilig, dass der Schaumstoffstreifen relativ steif ist und in der Rohrform eine relativ große auswärtsgerichtete Formkraft erzeugt, die eine entsprechend hohe Spannung auf dem Überschlagverschluss ausübt. Insbesondere im Fall höherer Umgebungstemperaturen und bei engeren Radien besteht die Gefahr, dass die Ummantelung aufgeht, sodass der Schutz verloren geht. Darüber hinaus ist auch in diesem Fall von Nachteil, dass bei Temperatureinwirkung toxische Gase entstehen können. Zudem ist das Element relativ dick und steif, sodass die Verlegung beeinträchtigt wird. Hinzu kommt, dass das Abziehen des Schutzpapiers einen erheblichen Aufwand bei der Montage verursacht und zusätzliche Entsorgungsprobleme bereitet, da es sich bei dem Silikonpapier um Sondermüll handelt. Zudem ist die Montage, insbesondere bei längeren Abschnitten, äußerst schwierig. Wenn bei der Montage der Klebestreifen beschädigt wird, ist die Klebkraft nicht mehr vorhanden.

Aus der DE-219711387 U1 ist eine Ummantelung für langgestreckte Gegenstände bekannt, die für verschiedene Durchmesser der zu ummantelnden Gegenstände verwendet werden kann. Diese Ummantelung weist
einen innenliegenden Schaumstoffstreifen und eine außenliegende Gewebebahn auf, die mit dem Schaumstoffstreifen fest verbunden ist und entlang der Längskanten des Schaumstoffstreifens beidseitig über diesen übersteht, wobei beide überstehenden Streifen an der Innenseite des überstehenden Geweberandes einen Klebstoffauftrag aufweisen. Dieser Klebstoffauftrag ist mit einem Schutzpapier abgedeckt. Die Gewebebahn ist ein nicht näher beschriebenes Schlingengewebe, wobei die Schlingen als Haft- bzw. Verhakpartner für die Hakenorgane eines Hakenträgerelements ausgebildet sind, sodass die Ummantelung mit dem Hakenträgerelement nach Art eines Klettverschlusses lösbar verbindbar ist. Zur Befestigung der Ummantelung beispielsweise an einem Kabelbaum wird die Umhüllung mit einem überstehenden Geweberand an einen zu umhüllenden Kabelbau angelegt und gegen den Kabelbaum gedrückt. Daraufhin wird die Ummantelung um den Kabelbau herumgewickelt, bis der Schaumstoffstreifen mit seiner vollen Breite das Kabel umgibt und ggf. überlappt. Anschließend wird der mit Kleber versehene weiter überstehende Geweberand auf die Außenseite der bereits auf den Kabelbaum verlegten Gewebebahn gedrückt.

Bei dieser bekannten Ummantelung ist von Nachteil, dass zunächst Schutzpapier von Klebflächen entfernt werden muss. Zudem muss die Ummantelung entlang der Längskante der Ummantelung an das Kabel geklebt und dann quer zur Längserstreckung um das Kabel gelegt werden. Bei langen Kabelbäumen ist diese Arbeit schwierig, wenn an allen Stellen des Kabelbaums ein gleichmäßiges Andrücken erreicht werden soll. Die Ummantelung muss zum Verkleben auf der gesamten Länge straffgezogen werden, was nicht immer einwandfrei gelingt. Des Weiteren ist generell bei Schaumstoffen von Nachteil, dass die Schaumstoffe Scheuer- oder Reibbelastungen relativ ungenügend widerstehen.

Aus der DE 102 43 941 A1 ist eine Schutzummantelung für längliche Körper, z.B. Kabelbäume, Rohre und dergleichen sowie ein Verfahren und die Vorrichtung zur Herstellung des als Schutzummantelung dienenden Materials bekannt. Die vorgeschlagene Schutzummantelung ist hierbei zweischichtig ausgebildet mit einem Velours und einer auf dem Velours angeordneten Folienschicht, wobei es sich bei der Folienschicht um Klettfolie handelt, die eine glatte Seite besitzt, mit der die Folie auf dem Velours eingeordnet ist und die gegenüberliegende Seite mit Haken oder Pilzen in bekannter Weise ausgebildet ist. Bei einem Längsumschlag mit einer Überlappung der Schutzummantelung können somit die Haken oder Pilze in den hochstehenden Schlingen des Velours verhaken. Um die Montage zu erleichtern und das Verhaken der Pilze oder Haken während des Transports zu vermeiden wird in an sich bekannter Weise auf die Hakenschicht außenseitig eine Vliesschicht aufgelegt, die zumindest teilbereichsweise für Montage abgenommen wird. Bei einer derartigen Schutzummantelung ist von Nachteil, dass diese als Wickelband für längliche Körper nicht verwendbar ist, sondern ausschließlich als sogenanntes Längsumschlagband. Somit lassen sich gewisse Schutzummantelungsdicken hiermit nicht erreichen. Ferner ist von Nachteil, dass die relativ teuere Schutzschicht für die Haken oder Pilze vor der Montage entfernt und verworfen werden muss.

Aus der EP 1066670 ist eine Schutzummantelung bekannt. Diese Schutzummantelung ist in Form eines Wickelbandes ausgebildet mit einem im Wesentlichen zweischichtigen Aufbau mit zwei textilen Schichten, wobei das Wickelband eine bezüglich des zu schützenden Objekts innere Textilschicht aus einem Vlies und eine bezogen auf das zu schützende Objekt auf die innere Schicht aufgebrachte äußere textile Schicht aus einem Kettstuhlwirkwaren- Velours aufweist. Die beiden textilen Schichten sind über eine Verklebung miteinander verbunden, wobei der Klebstoff vorzugsweise teilbereichsweise beispielsweise in Form eines Wärme-aktivierbaren Vlieses oder Films aufgebracht ist. Alle textile Schichten sind aus synthetischen Fasern, insbesondere Polyamid oder Polyester hergestellt wobei das Vlies vorzugsweise ein Nadelvlies ist. Die äußere textile Schicht in Form eines Kettstuhlwirkwaren- Velours ist vorzugsweise eine zweibarrige Kettstuhlwirkwaren- Veloursware mit einer gewirkten Unterkette und einer in die Unterkette eingewirkten Oberkette, wobei die Oberkette von der Stoff- bzw. Textilebene nach außen vorstehende, hoch geraute Veloursschlingen ausbildet. Derartige hoch geraute Veloursschlingenwaren sind bei der Verwendung als Klettbänder als Gegenstück zu so genannten Filzbändern bekannt. Bei dieser Druckschrift sollen die hoch gerauten Veloursschlingen jedoch übermäßig hoch ausgebildet sein. Dieses Wickelband soll Helix -artig auf das zu schützende Objekt aufgewickelt werden, wobei an der dem zu schützenden Objekt zugewandten Fläche eine Klebstoffschicht vorhanden ist. Ein derartiges Wickelband hat sich im Prinzip bewährt, aber auch dieses Wickelband ist nicht in der Lage, insbesondere bei sich weiter verengenden Bauräumen in Kraftfahrzeugen und damit engeren Verlegeradien auch entlang harter Kanten die langgestreckten Gegenstände bzw. Kabelbäume über die voraussichtliche Lebenszeit des Fahrzeuges zuverlässig zu schützen. Ferner ist es recht dick und damit schlecht zu handhaben.

Aufgabe der Erfindung ist es, eine Schutzummantelung bzw. eine Abriebschutzvorrichtung zu schaffen, welche eine deutlich erhöhte Lebensdauer und ein verbessertes Abriebschutzverhalten bei einer verbesserten Montierbarkeit besitzt.

Die Aufgabe wird mit einer Vorrichtung mit den Merkmalen des Anspruchs 1 gelöst. Weitere Ausgestaltungen sind in Unteransprüchen gekennzeichnet.

Erfindungsgemäß sieht die Erfindung zwischen zwei außenliegenden Schichten eine dünne Folienschicht vor. Diese Folienschicht verbindet die beiden an sie angrenzenden Schichten und bildet einen Verbund in dem von der einen oder der anderen außenliegenden Schicht in den Verbund eingetragene Spannungen besser verteilt und im gesamten Verbund abgebaut werden. Im Gegensatz zu bekannten Schutzvorrichtungen werden somit nicht nur Spannungen die von außen an eine Schutzvorrichtung herangetragen werden abgebaut sondern auch Spannungen die von innen nach außen wirken. Die Abriebschutzvorrichtung nach der Erfindung weist somit einen Verbund mit einem zumindest dreistufigen Aufbau auf. Die beiden äußeren Schichten können beispielsweise textile Schichten sein. Die textilen Schichten können dabei abgestimmt auf die zu erwartenden Belastungen bzw. die erwarteten anliegenden und möglicherweise scheuernden Gegenstände und Oberflächen ausgelegt sein. Der Verbund besitzt als äußere Schichten ein zum zu schützenden Körper angeordnetes Vlies und einer auf der dem zu schützenden Körper abgewandten Seite des Vlieses angeordneten Folienschicht auf, wobei auf der dem Vlies abgewandten Fläche der Folienschicht eine Veloursschicht angeordnet ist. Bei der Veloursschicht handelt es sich um eine dünne Veloursschicht mit einem Flächengewicht von nur 50 g pro m². Vorzugsweise wird die Veloursschicht aus einem Polyamid ausgebildet.

Die erfindungsgemäße Folie kann aus verschiedenen Kunststoffen ausgebildet sein, wobei wesentlich ist, dass die Folie eine gewisse Weichheit besitzt. Das Vlies kann aus einer Vielzahl von Kunststoffen hergestellt sein. Auf der der Folie abgewandten Seite des Vlieses kann zudem ein Klebstoff aufgebracht sein, um die Abriebschutzvorrichtung auf einen zu schützenden Gegenstand aufzuwickeln und gleichzeitig zu verkleben. Erfindungsgemäß ist mit der Vorrichtung jedoch auch ein Längsumschlag ohne Weiteres möglich, wobei hierbei entlang einer Längskante der Vliesunterseite eine geeignete Kletteinrichtung angeordnet wird, welche mit dem Velours eine sichere Verklettung ergibt.

Bei der Erfindung ist von Vorteil, dass die Anordnung einer dünnen weichen Folie zwischen Vlies und Velours eine Abriebstabilität ergibt, die zuvor mit keiner der Einzelkomponenten oder der Kombination zweier dieser Einzelkomponenten möglich war. Ein Vlies mit einer außenseitigen oder innenseitigen Folie oder ein Velours mit einer zum zum schützenden Gegenstand hin angeordneten Folie ergaben Abriebstabilitäten, die - sofern überhaupt nutzbar - weit hinter der Erfindung zurückblieben. Auch die Kombination des Vlieses und des erfindungsgemäß verwendeten Velours miteinander ergaben keine Abriebstabilität, die mit der Abriebstabilität des Dreischicht-Laminates aus Vlies, Folie und Velours vergleichbar wäre. Offenbar ergibt sich zwischen der äußeren und der inneren Schicht und der dazwischen angeordneten Folie ein synergistischer Effekt.

Die Erfindung wird anhand einer Zeichnung erläutert. Es zeigen dabei:
- Fig. 1: stark schematisiert den dreischichtigen Aufbau der Erfindung insbesondere zur Verwendung als Wickelband;
- Fig. 2: den dreischichtigen Aufbau nach der Erfindung mit einer Kletteinrichtung insbesondere zur Verwendung als Längsumschlag.

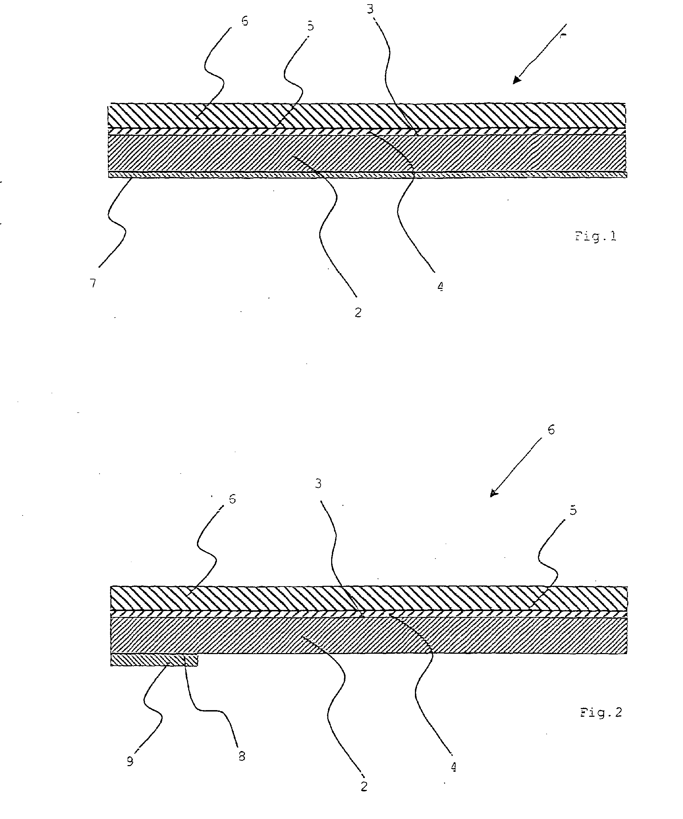

Eine erfindungsgemäße Abriebschutzvorrichtung 1 (Fig. 1) ist ein mehrschichtiges Laminat und weist eine bezüglich des zu schützenden Objekts objektseitige textile Schicht 2 aus einem Vlies 2, eine darauf angeordnete objektabgewandte Folie 4 und eine darauf angeordnete objektabgewandte textile Schicht 6 aus einem Velours auf. Zwischen der Schicht 2 und 4 ist eine Verbindungsschicht 3, und zwischen den Schichten 4 und 6 eine Verbindungsschicht 5 angeordnet. Zum zu schützenden Objekt hin ist auf der Schicht 3 eine Verklebungsschicht 7 aufgebracht angeordnet.

Die textile Schicht 2 ist aus einem Vliesstoff ausgebildet. Als Vliesstoffe bezeichnet man flexible, poröse Flächengebilde, die nicht durch die klassische Methode der Gewebebindung von Kette und Schuss oder durch Maschenbildung sondern durch Verfestigung von Faservliesen hergestellt sind. Faservliesen sind lockere Materialien aus natürlichen, synthetischen, organischen oder mineralischen Textilfasern, deren Zusammenhalt im Allgemeinen durch die den Fasern eigene Haftung gegeben ist. Hierbei können die Einzelfasern eine Vorzugsrichtung aufweisen oder als so genannte Wirrfaservliese ungerichtet angeordnet sein. Derartige Vliese können adhäsiv z. B. durch Verkleben oder Verschweißen der Fasern, mechanisch z. B. durch Nadeln oder durch den Einfluss von Wärme oder Chemikalien verfestigt sein. Erfindungsgemäß können alle derartigen Vliesstoffe eingesetzt werden. Die erste textile Schicht 2 bzw. innere Schicht 2 ist ein Faservlies aus synthetischen Fasern. Das Vlies ist beispielsweise ein vernadeltes Vlies, ein thermisch oder chemisch verbundenes Vlies ist jedoch ebenfalls verwendbar. Als Material für die Vliesfasern werden bevorzugt synthetische Fasern, insbesondere Polyamid und/oder Polyester verwendet. Das Flächengewicht des Vlieses beträgt 100 bis 200 g pro m², vorzugsweise 150 g pro m² bei einer bevorzugten Dicke zwischen 0,5 mm bis 1,5 mm.

Die Folie 4 ist eine Kunststofffolie. Als die Folie ausbildende Kunststoffe sind Polyurethan, Weich-PVC, Polyethen, Polyamid, Polytetrafluorethen (PTFE) und andere Kunststoffe als Rein- oder Mischpolymeriesat geeignet. Voraussetzung ist, dass der die Folie ausbildende Kunststoff eine sehr weiche Folie ermöglicht, die zudem dünn und flexibel und trotzdem reißfest ist. Die Folie besitzt eine Dicke von 50-200, vorzugsweise 100 µm.

Die Folie kann auch ein Laminat aus einer Mehrzahl von Folienschichten aus gleichen oder unterschiedlichen Kunststoffen sein.

Die Folie ist auf das Vlies 2 auflaminiert, wobei eine zusätzliche Verbindungsschicht 3 aus Klebstoff und/oder einem geeigneten Haftvermittler vorhanden ist. Darüber hinaus ist es möglich, die Folie 4 und die Vliesschicht 2 thermisch miteinander zu verbinden.

Die äußere textile Schicht 6 ist eine Veloursschicht 6. Die Veloursschicht hat die Aufgabe, die Folie 4 nach außen abzudecken und gegen direkten Kontakt zu schützen, trägt selbst jedoch nicht wesentlich zur Abriebstabilität bei. Es ist deshalb möglich, die Veloursschicht relativ dünn, beispielsweise mit einem Flächengewicht von 50g/m². Die Schicht 6 kann als Kettstuhlwirkwaren-Velours und insbesondere als zweibarrig Kettstuhlwirkwaren-Velours ausgebildet sein, wobei eine Unterkette und eine Oberkette vorhanden ist. Die das Velours ausbildenden Filamente können Multi- oder Monofilamente sein, wobei die Feinheit der Filamente zwischen 30 und 80 und insbesondere 40 bis 50 DTEX (DTEX = 0,1 TEX; 1 TEX = 1 g/km Filamentlänge). Das Fadenmaterial ist bevorzugt Polyamid oder Polyester, wobei auch andere Kunststofffasern verwendbar sind. Die Schicht 6 ist auf die Folie 4 auflaminiert, wobei zwischen den Schichten 4 und 6 eine Klebstoffschicht 5 oder Haftvermittlungsschicht 5 vorhanden ist.

Bei der Verwendung der Vorrichtung 1 insbesondere als Wickelband ist unterseitig auf der Schicht 2 eine Klebstoffschicht 7 voll- oder teilflächig aufgebracht, wobei das Wickelband mit einer gewissen Überdeckung Helix-artig um den zu schützenden Gegenstand gewickelt wird, sodass die Klebstoffschicht 7 einerseits mit der Oberfläche der Schicht 6 und andererseits mit dem zu schützenden Objekt (nicht gezeigt) in Verbindung kommt und eine Klebung herbeiführt. Bei der Verwendung der Vorrichtung 1 als Wickelband kann die Schicht 6 auch aus einem anderen Textilmaterial als einem Velours ausgebildet werden, da diese Schicht Im Wesentlichen dem Schutz der Folie 4 der äußeren Einflüsse dient. Gleichwohl scheint die äußere Schicht 6 auch einen synergistischen Effekt bezüglich der Abriebstabilität der Verbindung zwischen der Folie 4 und der unteren Schicht 2 zu ergeben, da ohne die äußere Schicht die erfindungsgemäß erzielbare Abriebbeständigkeit nicht erzielt wird. Es kann vermutet werden, dass über die Schicht 6 eingetragene Kräfte durch die Folienschicht 4 gleichmäßiger auf die Vliesschicht 2 abgeleitet werden können und so Reibkräfte, die punktuell eingetragen werden, in der Fläche der Vorrichtung 1 abgebaut werden.

Bei einer weiteren Ausführungsform der erfindungsgemäßen Vorrichtung (Fig. 2) ist die Vorrichtung 6 für den Längsumschlag um ein zu schützendes Objekt ausgebildet. Hierbei sind die Schichten 2, 3, 4, 5 und 6 in gleicher Weise wie im ersten Beispiel ausgebildet, wobei hierbei die Schicht 6 auf jeden Fall als Veloursschicht ausgebildet ist. Unterseitig besitzt die Schicht 2 zumindest entlang einer Kante ein Pilz- oder Hakenband 9, welches mit einer Verbindungsschicht 8 mit der Schicht 2 verbunden ist. Beim Längsumschlag kommt das Pilz- oder Hakenband 9 im Bereich der Längskante beim Umschlagen auf einem Teil der Schicht 6 ebenfalls im Bereich der Längskante, und zwar der gegenüberliegenden Längskante, zu liegen. Das Haken- oder Pilzband 9 verhakt hierbei mit den Haken in den Schlingen des Velours 6, wobei die Schlingen des Velours 6 auf die Pilzbandgeometrie abgestimmt sind.

Das Pilzband 9 oder Hakenband 9 kann unterhalb der Schicht 2 auch vollflächig angeordnet sein, was die Montage erleichtert und insbesondere bei Stoßbelastungen durch die Verformbarkeit der Pilze einen weitergehenden Schutz des zu schützenden Objekts bewirkt.

Die Vorrichtung 1 kann aus den drei genannten Schichten 2,4,6 oder als Verbund mit mehreren der aufeinanderlaminierten Laminaten mit immer gleicher Schichtenabfolge 246-246-246 oder unterschiedlicher Schichtenabfolge 246-642-246 etc. ausgebildet sein.

Ferner kann die Vorrichtung auch als vollflächiger Schutz verwendet werden. Hierfür kann unterseitig der Schicht 2 eine Klebstoff- oder sonstige Haftvermittlungsschicht voll- oder teilflächig aufgeklebt sein. Die Vorrichtung wird dann voll- oder teilflächig auf ein zu schützendes Objekt geklebt. Darüber hinaus kann die Vorrichtung auch mittels Klettverschlüssen angeordnet werden.

Bei der Erfindung ist von Vorteil, dass langgestreckte Gegenstände wie Kabelbäume, Kabelleitungen oder dergleichen besonders gut gegen schlagende oder reibende Belastungen und insbesondere abriebgeschützt sind. Ferner ist von Vorteil, dass durch die dünne äußere Textilschicht und insbesondere Veloursschicht und die vorhandene dünne und außerordentliche weiche Folienschicht die Montage besonders erleichtert wird und insbesondere die Schutzvorrichtung sehr dünn und flexibel ist und auch nach der Montage keine Falten oder Ähnliches wirft. Durch die glatte Oberfläche werden Angriffspunkte für reibende Belastungen verhindert.

## Patentansprüche

1. Abriebschutzvorrichtung insbesondere für Kabel, Leitungen, Litzen, Hüllrohre und dergleichen, bestehend aus zumindest einem Verbund (1) bzw. Laminat (1), wobei der zumindest eine Verbund oder das zumindest eine Laminat eine erste textile Schicht (2) und eine zweite textile Schicht (6) besitzt, wobei zwischen der textilen Schicht (2) und der textilen Schicht (6) eine Folienschicht (4) angeordnet ist,
**dadurch gekennzeichnet,**
**dass** zwischen der Folie (4) und der textilen Schicht (2) eine zusätzliche Verbindungsschicht (3) aus einem Klebstoff und/oder einem geeigneten Haftvermittler vorhanden ist und zwischen den Schichten (4) und (6) eine Klebstoffschicht (5) oder Haftvermittlungsschicht (5) vorhanden ist.

2. Vorrichtung nach Anspruch 1, **dadurch gekennzeichnet, dass** die eine textile Schicht (2) aus einem Vlies (2) ausgebildet ist.

3. Vorrichtung nach Anspruch 1 und/oder 2, **dadurch gekennzeichnet, dass** die zweite textile Schicht (6) aus einem Velours ausgebildet ist.

4. Vorrichtung nach einem der vorhergehenden Ansprüche, **dadurch gekennzeichnet, dass** die Folie (4) eine Kunststofffolie ist.

5. Vorrichtung nach einem der vorhergehenden Ansprüche, **dadurch gekennzeichnet, dass** der zumindest eine Verbund (1) bzw. das zumindest eine Laminat (1) mit dem Vlies (2) zum schützenden Objekt hin angeordnet wird.

6. Vorrichtung nach einem der vorhergehenden Ansprüche, **dadurch gekennzeichnet, dass** die erste textile Schicht (2) ein Faservlies aus synthetischen Fasern ist.

7. Vorrichtung nach einem der vorhergehenden Ansprüche, **dadurch gekennzeichnet, dass** das Vlies ein vernadeltes Vlies, ein thermisch verbundenes Vlies oder ein chemisch verbundenes Vlies ist.

8. Vorrichtung nach einem der vorhergehenden Ansprüche, **dadurch gekennzeichnet, dass** das Vlies ein verklebtes Vlies ist.

9. Vorrichtung nach einem der vorhergehenden Ansprüche, **dadurch gekennzeichnet, dass** die Vliesfasern synthetisches Fasern sind und aus Polyamid und/oder Polyester ausgebildet sind.

10. Vorrichtung nach einem der vorhergehenden Ansprüche, **dadurch gekennzeichnet, dass** das Flächengewicht des Vlieses zwischen 100 bis 200 g/m² beträgt.

11. Vorrichtung nach einem der vorhergehenden Ansprüche, **dadurch gekennzeichnet, dass** das Vlies ein Flächengewicht von 150 g/m² besitzt.

12. Vorrichtung nach einem der vorhergehenden Ansprüche, **dadurch gekennzeichnet, dass** das Vlies eine Dicke zwischen 0,5 mm bis 1,5 mm besitzt.

13. Vorrichtung nach einem der vorhergehenden Ansprüche, **dadurch gekennzeichnet, dass** die Folie (4) eine Kunststofffolie ist, wobei die Folie ausbildende Kunststoffe Polyurethan und/oder Weich-PVC und/oder Polyethen und/oder Polyamid und/oder Polyamid und/der Polytetrafluorethen und/oder andere Kunststoffe als Rein- oder Mischpolymerisate sind.

14. Vorrichtung nach einem der vorhergehenden Ansprüche, **dadurch gekennzeichnet, dass** die Folie (4) eine Laminatfolie aus mehreren Folienschichten ist.

15. Vorrichtung nach einem der vorhergehenden Ansprüche, **dadurch gekennzeichnet, dass** die Folie (4) eine Dicke von 50-200 µm hat.

16. Vorrichtung nach einem der vorhergehenden Ansprüche, **dadurch gekennzeichnet, dass** die Folie eine Dicke von 100 µm hat.

17. Vorrichtung nach einem der vorhergehenden Ansprüche, **dadurch gekennzeichnet, dass** die Folie (4) auf das Vlies (2) auflaminiert ist.

18. Vorrichtung nach einem der vorhergehenden Ansprüche, **dadurch gekennzeichnet, dass** die äußere textile Schicht (6) eine Veloursschicht (6) ist, wobei die Veloursschicht die Folie (4) nach außen abdeckt und gegen direkten Kontakt schützt.

19. Vorrichtung nach einem der vorhergehenden Ansprüche, **dadurch gekennzeichnet, dass** die Veloursschicht (6) eine dünne Veloursschicht mit einem Gewicht von 40 bis 100g/m², insbesondere 45 bis 70g/m² ist.

20. Vorrichtung nach einem der vorhergehenden Ansprüche, **dadurch gekennzeichnet, dass** die Schicht (6) als Wirkwaren-Velours ausgebildet ist.

21. Vorrichtung nach einem der vorhergehenden Ansprüche, **dadurch gekennzeichnet, dass** die Schicht (6) als Kettstuhlwirkwaren-Velours mit zwei Barren ausgebildet ist, wobei die Unterkette und eine Oberkette vorhanden sind.

22. Vorrichtung nach einem der vorhergehenden Ansprüche, **dadurch gekennzeichnet, dass** die das Velours ausbildende Filamente Multi- oder Monofilamente sind.

23. Vorrichtung nach einem der vorhergehenden Ansprüche, **dadurch gekennzeichnet, dass** die Feinheit der das Velours ausbildenden Filamente zwischen 30 und 80 DTEX und insbesondere 40 bis 50 DTEX beträgt (DTEX = 0,1 TEX; 1 TEX = 1 g/km Filamentlänge).

24. Vorrichtung nach einem der vorhergehenden Ansprüche, **dadurch gekennzeichnet, dass** die Filamente aus Polyamid und/oder Polyester oder anderen Kunststofffasern ausgebildet sind.

25. Vorrichtung nach einem der vorhergehenden Ansprüche, **dadurch gekennzeichnet, dass** die Schicht (6) auf die Folie (4) auflaminiert ist.

26. Vorrichtung nach einem der vorhergehenden Ansprüche, **dadurch gekennzeichnet, dass** die Vorrichtung (1) als Wickelband ausgebildet ist, wobei unterseitig auf der Schicht (2) eine Klebstoffschicht (7) voll- oder teilflächig aufgebracht ist, um das Wickelband mit einer gewissen Überdeckung Helix-artig um den zu schützenden Gegenstand zu wickeln, sodass die Klebstoffschicht (7) einerseits mit der Oberfläche der Schicht (6) und andererseits mit dem zu schützenden Objekt in Verbindung kommt und eine Klebung herbeiführt.

27. Vorrichtung nach einem der vorhergehenden Ansprüche, **dadurch gekennzeichnet, dass** die Vorrichtung (6) für den Längsumschlag um ein zu schützendes Objekt ausgebildet ist, wobei die Schicht (2) unterseitig zumindest entlang einer Umschlagkante ein Pilz- oder Hakenband (9) besitzt, welches mit der Schicht (2) verbunden ist, sodass beim Längsumschlag das Pilz- oder Hakenband (9) im Bereich der Längskante beim Umschlagen auf einen Teil der Schicht (6) ebenfalls im Bereich der Längskante zu liegen kommt, sodass sich das Haken- oder Pilzband (9) jeweils mit den Haken in den Schlingen des Velours (6) verhakt.

28. Vorrichtung nach einem der vorhergehenden Ansprüche, **dadurch gekennzeichnet, dass** die Vorrichtung flächig ausgebildet ist zum flächigen Bedecken eines zu schützenden Objektes, wobei unterseits der Schicht (2) eine Verbindungs- oder Klebstoffschicht zur flächigen Befestigung vorhanden ist.

29. Vorrichtung nach einem der vorhergehenden Ansprüche, **dadurch gekennzeichnet, dass** die Vorrichtung aus mehreren Lagen des Verbundes (1) bzw. Laminates (1) aus den Schichten (2, 3, 4, 5 und 6) ausgebildet ist.

## Claims

1. Abrasion protection device, in particular for cables, lines, wires, cladding tubes and the like, consisting of at least one composite (1) or laminate (1), wherein the at least one composite or the at least one laminate comprises a first textile layer (2) and a second textile layer (6), wherein a film layer (4) is arranged between the textile layer (2) and the textile layer (6), **characterised in that** an additional connecting layer (3) consisting of an adhesive and/or a suitable adhesion intermediary is provided between the film (4) and the textile layer (2), and an adhesive layer (5) or adhesion intermediate layer (5) is provided between the layers (4) and (6).

2. Device according to claim 1, **characterised in that** the first textile layer (2) is made of a non-woven material (2).

3. Device according to claim 1 and/or 2, **characterised in that** the second textile layer (6) is made of a velour.

4. Device according to one of the preceding claims, **characterised in that** the film (4) is a plastic film.

5. Device according to one of the preceding claims, **characterised in that** the at least one composite (1) or the at least one laminate (1) is arranged with non-woven material (2) facing towards the object to be protected.

6. Device according to one of the preceding claims, **characterised in that** the first textile layer (2) is a fibrous web made from synthetic fibres.

7. Device according to one of the preceding claims, **characterised in that** the non-woven material is a needled non-woven material, a thermally bonded non-woven material or a chemically bonded non-woven material.

8. Device according to one of the preceding claims, **characterised in that** the non-woven material is an adhesively bonded non-woven material.

9. Device according to one of the preceding claims, **characterised in that** the non-woven fibres are synthetic fibres and are made from polyamide and/or polyester.

10. Device according to one of the preceding claims, **characterised in that** the weight per unit area of the non-woven material is between 100 and 200 g/m².

11. Device according to one of the preceding claims, **characterised in that** the non-woven material has a weight per unit area of 150 g/m².

12. Device according to one of the preceding claims, **characterised in that** the non-woven material has a thickness of between 0.5 mm and 1.5 mm.

13. Device according to one of the preceding claims, **characterised in that** the film (4) is a plastic film, wherein the film-forming plastics are polyurethane and/or soft PVC and/or polyethylene and/or polyamide and/or polytetrafluoroethylene and/or other plastics as pure or mixed polymers.

14. Device according to one of the preceding claims, **characterised in that** the film (4) is a laminate film consisting of a plurality of film layers.

15. Device according to one of the preceding claims, **characterised in that** the film (4) has a thickness of 50 to 200 µm.

16. Device according to one of the preceding claims, **characterised in that** the film has a thickness of 100 µm.

17. Device according to one of the preceding claims, **characterised in that** the film (4) is laminated onto the non-woven material (2).

18. Device according to one of the preceding claims, **characterised in that** the outer textile layer (6) is a velour layer (6), wherein the velour layer covers the outer side of the film (4) and protects the latter against direct contact.

19. Device according to one of the preceding claims, **characterised in that** the velour layer (6) is a thin velour layer having a weight of 40 to 100 g/m², in particular 45 to 70 g/m².

20. Device according to one of the preceding claims, **characterised in that** the layer (6) is formed as a knitted velour.

21. Device according to one of the preceding claims, **characterised in that** the layer (6) is formed as a warp knitted velour with two bars, wherein the lower warp and an upper warp are present.

22. Device according to one of the preceding claims, **characterised in that** the filaments forming the velour are multifilaments or monofilaments.

23. Device according to one of the preceding claims, **characterised in that** the titre of the filaments forming the velour is between 30 and 80 DTEX and in particular 40 to 50 DTEX (DTEX = 0.1 TEX; 1 TEX = 1 g/km filament length).

24. Device according to one of the preceding claims, **characterised in that** the filaments are made from polyamide and/or polyester or other plastic fibres.

25. Device according to one of the preceding claims, **characterised in that** the layer (6) is laminated onto the film (4).

26. Device according to one of the preceding claims, **characterised in that** the device (1) is designed as a wrapping tape, wherein an adhesive layer (7) is applied over all or part of the underside of the layer (2) in order to wrap the wrapping tape with a certain coverage in a helical manner around the object to be protected, so that the adhesive layer (7) comes into contact on the one hand with the surface of the layer (6) and on the other hand with the object to be protected and brings about adhesion.

27. Device according to one of the preceding claims, **characterised in that** the device (6) is designed to be wrapped around the length of an object to be protected, wherein the layer (2) has on its underside, at least along a wrapover edge, a hook strip (9) which is connected to the layer (2) so that, during wrapping in the length direction, the hook strip (9) in the region of the longitudinal edge comes to bear during wrapping against part of the layer (6) also in the region of the longitudinal edge, so that the hooks of the hook strip (9) hook into the loops of the velour (6).

28. Device according to one of the preceding claims, **characterised in that** the device is of a flat shape so as to cover the surface of an object to be protected, wherein a connection or adhesive layer is provided on the underside of the layer (2) for fixing purposes.

29. Device according to of the preceding claims, **characterised in that** the device is formed of several plies of the composite (1) or laminate (1) consisting of the layers (2, 3, 4, 5 and 6).

## Revendications

1. Dispositif de protection contre l'abrasion en particulier pour des câbles, des lignes, des torons, des gaines et similaires, constitués d'au moins un élément composite (1) ou un stratifié (1), le au moins un élément composite ou le au moins un stratifié présentant une première couche (2) textile et une seconde couche (6) textile, une couche de films (4) étant disposée entre la couche (2) textile et la couche (6) textile,
**caractérisé en ce que**,
une couche de liaison (3) supplémentaire constituée d'une colle et/ou d'un agent adhésif approprié est présente entre le film (4) et la couche (2) textile et une couche de colle (5) ou une couche d'adhérence (5) est présente entre les couches (4) et (6).

2. Dispositif selon la revendication 1, **caractérisé en ce que** l'une des couches (2) textile est réalisée à base d'un non-tissé (2).

3. Dispositif selon la revendication 1 et/ou 2, **caractérisé en ce que** la seconde couche (6) textile est réalisée à base d'un velours.

4. Dispositif selon l'une quelconque des revendications précédentes, **caractérisé en ce que** le film (4) est un film plastique.

5. Dispositif selon l'une quelconque des revendications précédentes, **caractérisé en ce que** le au moins un élément composite (1) ou le au moins un stratifié (1) est disposé avec le non-tissé (2) en direction de l'objet à protéger.

6. Dispositif selon l'une quelconque des revendications précédentes, **caractérisé en ce que** la première couche (2) textile est un non-tissé à base de fibres synthétiques.

7. Dispositif selon l'une quelconque des revendications précédentes, **caractérisé en ce que** le non-tissé est un non-tissé aiguilleté, un non-tissé lié thermiquement ou un non-tissé lié chimiquement.

8. Dispositif selon l'une quelconque des revendications précédentes, **caractérisé en ce que** le non-tissé est un non-tissé collé.

9. Dispositif selon l'une quelconque des revendications précédentes, **caractérisé en ce que** les fibres de non-tissé sont des fibres synthétiques et sont conçues à base de polyamide et/ou de polyester.

10. Dispositif selon l'une quelconque des revendications précédentes, **caractérisé en ce que** le poids surfacique du non-tissé se situe entre 100 et 200 g/m².

11. Dispositif selon l'une quelconque des revendications précédentes, **caractérisé en ce que** le non-tissé présente un poids surfacique de 150 g/m².

12. Dispositif selon l'une quelconque des revendications précédentes, **caractérisé en ce que** le non-tissé présente une épaisseur comprise entre 0,5 mm et 1,5 mm.

13. Dispositif selon l'une quelconque des revendications précédentes, **caractérisé en ce que** le film (4) est un film plastique, des matières synthétiques formant le film étant du polyuréthane et/ou du PVC souple et/ou du polyéthène et/ou du polyamide et/ou du polytétrafluoréthane et/ou d'autres matières synthétiques comme des polymérisats purs ou des polymérisats mixtes.

14. Dispositif selon l'une quelconque des revendications précédentes, **caractérisé en ce que** le film (4) est un film stratifié à base de plusieurs couches de film.

15. Dispositif selon l'une quelconque des revendications précédentes, **caractérisé en ce que** le film (4) a une épaisseur de 50 à 200 µm.

16. Dispositif selon l'une quelconque des revendications précédentes, **caractérisé en ce que** le film a une épaisseur de 100 µm.

17. Dispositif selon l'une quelconque des revendications précédentes, **caractérisé en ce que** le film (4) est appliqué par stratification sur le non-tissé (2).

18. Dispositif selon l'une quelconque des revendications précédentes, **caractérisé en ce que** la couche (6) textile extérieure est une couche de velours (6), la couche de velours recouvrant le film (4) vers l'extérieur et le protégeant contre un contact direct.

19. Dispositif selon l'une quelconque des revendications précédentes, **caractérisé en ce que** la couche de velours (6) est une couche de velours mince avec un poids de 40 à 100 g/m², en particulier de 45 à 70 g/m².

20. Dispositif selon l'une quelconque des revendications précédentes, **caractérisé en ce que** la couche (6) est conçue comme du velours tricoté.

21. Dispositif selon l'une quelconque des revendications précédentes, **caractérisé en ce que** la couche (6) est conçue comme un velours tricoté à maille jetée avec deux barres, la chaîne inférieure et une chaîne supérieure étant présentes.

22. Dispositif selon l'une quelconque des revendications précédentes, **caractérisé en ce que** les filaments formant le velours sont des multifilaments ou des monofilaments.

23. Dispositif selon l'une quelconque des revendications précédentes, **caractérisé en ce que** la finesse des filaments formant le velours se situe entre 30 et 80 DTEX et en particulier entre 40 et 50 DTEX (DTEX = 0,1 TEX ; 1 TEX = 1 g/km de longueur de filament).

24. Dispositif selon l'une quelconque des revendications précédentes, **caractérisé en ce que** les filaments sont réalisés à base de polyamide et/ou de polyester ou d'autres fibres synthétiques.

25. Dispositif selon l'une quelconque des revendications précédentes, **caractérisé en ce que** la couche (6) est appliquée par stratification sur le film (4).

26. Dispositif selon l'une quelconque des revendications précédentes, **caractérisé en ce que** le dispositif (1) est conçu comme une bande d'enroulement, une couche de colle (7) étant appliquée sur toute la surface ou sur une surface partielle côté inférieur sur la couche (2), afin d'enrouler la bande d'enroulement avec un certain recouvrement à la façon d'une hélice autour de l'objet à protéger de sorte que la couche de colle (7) vient en liaison d'une part avec la surface de la couche (6) et d'autre part avec l'objet à protéger et entraîne un collage.

27. Dispositif selon l'une quelconque des revendications précédentes, **caractérisé en ce que** le dispositif (6) est réalisé pour le rabattement longitudinal autour d'un objet à protéger, la couche (2) présentant du côté inférieur au moins le long d'une arête de rabattement une bande en forme de champignon ou de crochet (9), qui est reliée à la couche (2), de sorte que, lors du rabattement longitudinal, la bande en forme de champignon ou de crochet (9) dans la zone de l'arête longitudinale est située lors du rabattement sur une partie de la couche (6) également dans la zone de l'arête longitudinale, de sorte que la bande en forme de crochet ou de champignon (9) s'accroche respectivement avec les crochets dans les boucles du velours (6).

28. Dispositif selon l'une quelconque des revendications précédentes, **caractérisé en ce que** le dispositif est conçu plat pour le revêtement à plat d'un objet à protéger, une couche de liaison ou de colle étant présente sur le côté inférieur de la couche (2) pour la fixation à plat.

29. Dispositif selon l'une quelconque des revendications précédentes, **caractérisé en ce que** le dispositif est réalisé à partir de plusieurs couches de l'élément composite (1) ou du stratifié (1) à partir des couches (2, 3, 4, 5 et 6).
